# EUROPEAN PATENT APPLICATION

(11) **EP 4 503 688 A1**
(43) Date of publication of application: **05.02.2025**
(21) Application number: 24184205.3
(22) Date of filing: 25.06.2024
(51) Int. Cl.: H04W 8/18, H04W 76/15, H04W 88/06

(54) **HANDLING NON-ACTIVE SUBSCRIBER IDENTITY MODULE SERVICES IN A MULTIPLE SUBSCRIBER IDENTITY MODULE DEVICE OPERATING IN DUAL SUBSCRIBER IDENTITY MODULE DUAL STANDBY (DSDS) MODE**

(30) Priority: 02.08.2023 US 202363517210 P
(71) Applicant: Apple Inc., Cupertino, CA 95014 (US)
(72) Inventor: JOSHI, Abhigyan, 560 052 Bengaluru (IN); PRASAD, Manjunath, 560 052 Bengaluru (IN); PATIL, Krishna Basawaraj, 500081 Hyderabad (IN); PRABHAKARA, Nithish Kulur, Cupertino, 95014 (US); LI, Li, Cupertino, 95014 (US); SINGH, Ajay, Cupertino, 95014 (US); JING, Xiangpeng, Sunnyvale, 94085 (US); ARORA, Dinesh Kumar, 560 052 Bengaluru (IN); PATHAK, Gaurav, 500008 Hyderabad (IN); VERMA, Rajeev, Cupertino, 95014 (US); GYANCHANDANI, Pinki, Cupertino, 95014 (US)
(74) Representative: Zacco Denmark A/S

(57) **Abstract**

Systems and methods for providing non-active subscriber identity module (SIM) services leveraging multiple SIMs configured at multiple UEs are disclosed herein. A primary user equipment (UE), activating a first SIM of a dual SIM dual standby (DSDS) configuration used by the primary UE to perform active-mode network communications on the first SIM and sends, to a secondary UE, an indication to activate a second SIM of the DSDS configuration in response to the activating the first SIM of the DSDS configuration used by the primary UE. The secondary UE receives the indication to activate the second SIM of the first DSDS configuration used by the primary UE and activates the second SIM for use by the secondary UE in response to receiving the indication. Accordingly, the secondary UE may handle any network communications on the second SIM during the network communications on the first SIM at the primary UE.

## Description

### TECHNICAL FIELD

This application relates generally to wireless communication systems, including wireless communication systems that provide non-active SIM services that leverage multiple SIMs configured at multiple UEs.

### BACKGROUND

Wireless mobile communication technology uses various standards and protocols to transmit data between a base station and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

As contemplated by the 3GPP, different wireless communication systems' standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, Global System for Mobile communications (GSM), Enhanced Data Rates for GSM Evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements Universal Mobile Telecommunication System (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC) while NG-RAN may utilize a 5G Core Network (5GC).

Frequency bands for 5G NR may be separated into two or more different frequency ranges. For example, Frequency Range 1 (FR1) may include frequency bands operating in sub-6 gigahertz (GHz) frequencies, some of which are bands that may be used by previous standards, and may potentially be extended to cover new spectrum offerings from 410 megahertz (MHz) to 7125 MHz. Frequency Range 2 (FR2) may include frequency bands from 24.25 GHz to 52.6 GHz. Note that in some systems, FR2 may also include frequency bands from 52.6 GHz to 71 GHz (or beyond). Bands in the millimeter wave (mmWave) range of FR2 may have smaller coverage but potentially higher available bandwidth than bands in FR1. Skilled persons will recognize these frequency ranges, which are provided by way of example, may change from time to time or from region to region.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a flowchart for a method of using coordinated UEs to prevent missed communications at a primary UE operating in a DSDS mode.
FIG. 2 illustrates a flow diagram for a method of using coordinated UEs to prevent missed communications at a primary UE operating in a DSDS mode.
FIG. 3 illustrates a flow diagram for a method of using coordinated UEs to prevent missed communications at a primary UE operating in a DSDS mode.
FIG. 4 illustrates a flow diagram for a method of using coordinated UEs to prevent missed communications at a primary UE operating in a DSDS mode.
FIG. 5 illustrates a flow diagram for a method of using coordinated UEs to prevent missed communications at a primary UE operating in a DSDS mode.
FIG. 6 illustrates a method of a primary UE, according to embodiments herein.
FIG. 7 illustrates a method of a secondary UE configured with a first SIM and a second SIM of a first DSDS configuration used by a primary UE, according to embodiments herein.
FIG. 8 illustrates an example architecture of a wireless communication system, according to embodiments disclosed herein.
FIG. 9 illustrates a system for performing signaling between a wireless device and a network device, according to embodiments disclosed herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

Embodiments herein relate to the use of multiple subscriber identity modules (SIMs) at each of a pair of UEs. A SIM of a UE identifies that UE as being owned by an entity (e.g., a user of the UE) that is subscribed to a wireless communication system for that SIM (e.g., that is operated by a particular wireless communication system operator). In some cases, a SIM may be removably stored at the UE (e.g., on a SIM card that is inserted into the UE. In other cases, a SIM may be stored on UE in a non-removable fashion.

Embodiments herein relate to a multiple SIM (MSIM) scenarios, where a UE includes two SIMs (e.g., such that the UE is ultimately allowed to access each of two wireless communication systems corresponding to the two SIMs). Such a UE may operate in a dual SIM dual standby (DSDS) mode, where each of the two SIMs is in a standby state where paging may be received (e.g., a radio resource control (RRC) idle state) while there is no active-mode network communication occurring (e.g., a telephone call, a short message service (SMS) message, etc.) with respect to the connection represented by/corresponding to either of the SIMs.

Then, under the DSDS mode, to perform active-mode network communication on a first of the two SIMs, the UE may use the first SIM as an "active SIM" (e.g., associate it with modem hardware of the UE for a period of active use for active-mode network communication on the first SIM). During the period while this first SIM is active (e.g., in an RRC connected state), according to the DSDS mode, network communications at the UE according to the second SIM of the two SIMs are not possible (this SIM may be referred to as the "non-active SIM").

During such periods, any network communications (e.g., calls, SMSs, etc.) that occur on the non-active SIM are missed at the UE. Note that even notifications and/or reminders of the missed communications are not communicated to a user of the UE in at least some such cases.

The missing of network communications on the non-active SIM may be undesirable for various reasons. For example, consider a scenario where UE operates according to a DSDS mechanism, and where a first SIM is associated with a use the UE for business purposes while a second SIM is associated with a use of the UE for personal purposes. In such cases, it may be that a user in a business call over the first SIM wishes to use an SMS-one time password (SMS-OTP) to complete some business-related transaction (like banking, session authentication of a user profile, a call authentication, etc.) but cannot because the related notification from the remote system is sent to the user on the personal SIM (and is therefore missed).

As another scenario, it may be that the user is on a business call on the first (business) SIM, and a high priority call is missed on the second (personal) SIM during this period.

It has been determined that these (and other) problematic scenarios with respect to the missing of network communications on a non-active SIM while another SIM is active at the UE may be alleviated through coordination with a second UE that is paired with the first UE. It may be understood that a first of these UEs is a primary UE that operates according to a DSDS mode and accordingly activates a first SIM when active-mode network communications occur on that first SIM. Further, a second of these UEs is a secondary UE that is capable of dynamic switching of its active SIM based on, for example, an active SIM of the primary UE.

In such circumstances, when the primary UE activates the first SIM, it may check for the default SIM of the secondary UE and, when this default is not the second SIM, may cause the secondary UE to switch over to the non-active SIM. The secondary UE can then provide continuity of service on the second SIM during the period that the primary UE is performing active-mode network communication on the first SIM.

In such cases, it will be understood that the term "non-active SIM" as used herein denotes the non-active status of that SIM with respect to the primary UE. As will be understood in context, such a "non-active SIM" may be activated/active at the secondary UE, as will be discussed.

Accordingly, it will be understood that each of the two DSDS SIMs for the primary UE are also configured on the secondary UE (such that the dynamic switch of SIM on the secondary UE between these two SIMs based on the non-active SIM on primary UE is possible). It is noted that, in some cases, the secondary UE may also be a DSDS device (and thus the configuration of the first SIM and the second SIM at the secondary UE may be according to a DSDS configuration) but this is not required.

In some cases, it may be understood that the primary UE is, for example, a smartphone carried by a user, while the secondary UE is a modem-equipped smartwatch worn by the user. Note, however, that this is merely one possible example - it is contemplated that in the general case, UEs of arbitrary form factors may be coordinated with each other and then used according to the mechanisms discussed herein.

The primary UE and the secondary UE may communicate with each other as described herein via a communication channel that does not (necessarily) travel back through their respective wireless communication networks associated with the SIMs. For example, such a communication channel may be a Bluetooth^{®} channel, a WiFi^{®} channel, or some other type of channel appropriate for communications between two devices that are within some local proximity to each other.

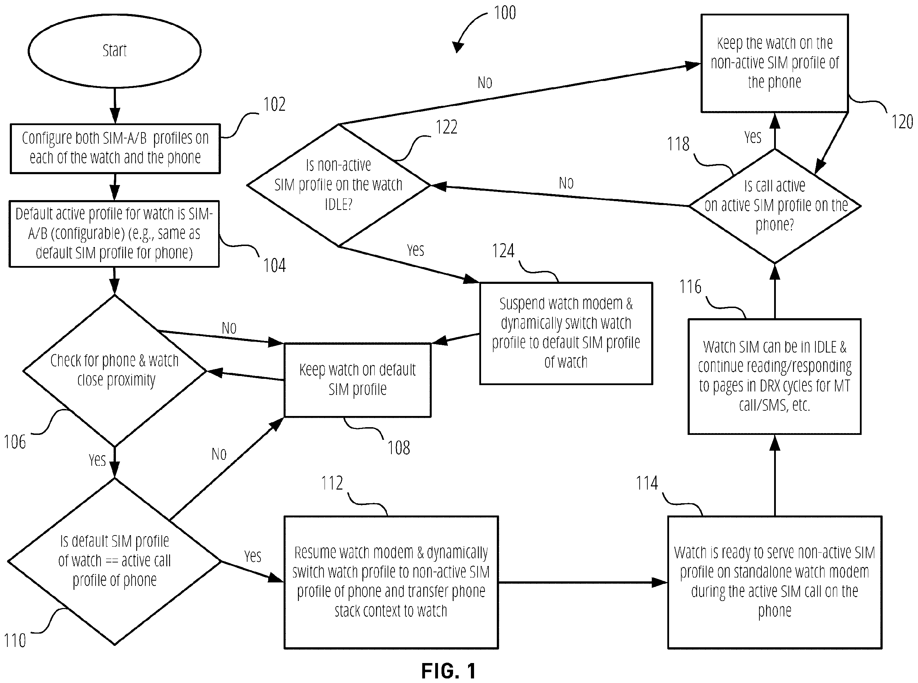

FIG. 1 illustrates a flowchart 100 for a method of using coordinated UEs to prevent missed communications at a primary UE operating in a DSDS mode. The flowchart 100 relates to a case where a primary UE is a smartphone (or "phone") and a secondary UE is a smartwatch (or "watch"), and where (at least) the primary UE operates in a DSDS mode (but note that UE(s) of arbitrary other form factors may have instead been used in place of either the phone or the watch).

Preliminarily, at block 102, the profiles for each of a first SIM ("SIM-A") and a second SIM ("SIM-B") are configured on each of the phone and the watch. Note that a SIM may be referred to equivalently as a "SIM profile" in some figures and/or disclosure provided herewith.

Then, a default SIM for the watch from one of the first SIM and the second SIM is configured at block 104. In various embodiments, the default SIM for the watch is configured to be the same as the default SIM for the phone.

Checks for various conditions for moving the watch from the default SIM to the other of the two SIMs are then performed. At block 106, a first check of whether the phone and the watch are within a proximity to each other is performed. This proximity may be a pre-determined value that has been selected to correspond to cases where it is reasonable to infer that a single user is presently carrying both the phone and the watch. If the phone and the watch are not within the proximity, the watch is kept on the default SIM as illustrated in block 108.

If the phone and the watch are within the proximity, a check of whether the active SIM at the watch is the same as a SIM that is being actively used at the UE for a call (or for some other active-mode network communication). If this is not the case, the watch is kept on the default SIM as illustrated in block 108.

If the default SIM at the watch is the same as a SIM that is being actively used at the phone for the call (or other active-mode network communication), then the watch modem is resumed (activated), the SIM of the watch is switched to the profile of the non-active SIM at the phone, and any stack at the phone corresponding to the non-active SIM is transferred to the watch, as illustrated in block 112.

Proceeding to block 114, the watch is now ready to serve the non-active SIM (e.g., is ready to perform (second) active-mode network communications on the non-active SIM) on the standalone watch modem during the period where the call/active-mode network communication on the active SIM is occurring on the phone. As illustrated in block 116, the watch uses the non-active SIM in a radio resource control (RRC) idle mode ("IDLE") and can, for example, read and/or respond to pages in discontinuous reception (DRX) cycles for one or more of a mobile terminated (MT) call, and SMS, etc. The secondary UE may further, for example, alert the user via a user interface of the watch that such a call/SMS/etc. has been received and/or provide the user with one or more options for responding/reacting to the call/SMS/etc.

Checks for various conditions for moving the watch back to the default SIM are then performed. As illustrated in block 118 and block 120, while the call/active-mode network communication on the active SIM of the phone remains in progress on the phone, the watch is kept on the non-active SIM. Further, as illustrated by block 122 and block 120, if the non-active SIM is not in an IDLE mode at the watch (implying that there is still ongoing active-mode network communication to the watch on the non-active SIM), the watch is kept on the non-active SIM. Once the call/active-mode network communication on the phone on the active SIM ends and the RRC state of the non-active SIM on the watch falls to IDLE, the watch modem is suspended and the SIM of the watch returns to the default SIM for the watch.

The watch is then kept on the default SIM until the checks represented in block 106 and block 110 are again passed through (e.g., a subsequent call/active-mode network communication occurs at the primary UE on the default SIM used by the watch).

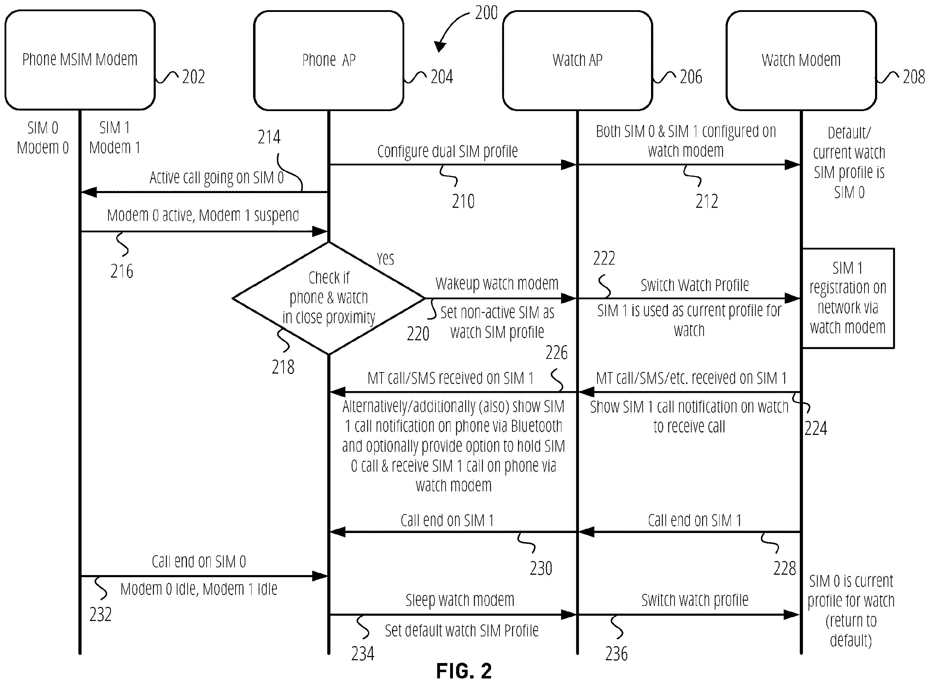

FIG. 2 illustrates a flow diagram 200 for a method of using coordinated UEs to prevent missed communications at a primary UE operating in a DSDS mode. The flow diagram 200 relates to a case where a primary UE is a smartphone (or "phone") and a secondary UE is a smartwatch (or "watch"), and where (at least) the primary UE operates in a DSDS mode (but note that UE(s) of arbitrary other form factors may have instead been used in place of either the phone or the watch).

The flow diagram 200 illustrates embodiments in terms of communications as between all of the phone MSIM modem 202 and the phone application processor (AP) 204 of the phone and the watch AP 206 and the watch modem 208 of the watch. The phone MSIM modem 202 operates according to DSDS operation and is configured with a first modem ("Modem 0") for use with a first SIM ("SIM 0") and a second modem ("Modem 1") for use with a second SIM ("SIM 1"), as illustrated.

The phone AP 204 then configures 210 each of the first and second SIMs to the watch AP 206. The watch AP 206 in turn configures 212 each of the first and second SIMs to the watch modem 208. As illustrated, according to this configuration, the watch modem 208 uses "SIM 0" as its default SIM.

Then, a notification 214 of an active call/other active-mode network communication arrives at the phone MSIM modem 202 from the phone AP 204. In response, the phone MSIM modem 202 informs the phone AP 204 that it has activated "Modem 0" for active-mode network communications and has suspended "Modem 1".

In response, the phone AP 204 checks 218 whether the phone and the watch are within a proximity of each other. This proximity may be a pre-determined value that has been selected to correspond to cases where it is reasonable to infer that a single user is presently carrying both the phone and the watch.

If it is determined that the phone and the watch are within the proximity to each other, the phone AP 204 sends 220 the watch AP 206 an instruction to wake up the watch modem and to set the non-active SIM as the current watch SIM. In response, the watch AP 206 sends 222 the watch modem 208 an instruction to switch the watch profile from the default SIM to the non-active SIM at the phone. Accordingly, "SIM 1" is used as the current SIM at the watch. As illustrated, the watch modem 208 may operate to register with the network with respect to "SIM 1".

After the watch is switched to "SIM 1" (and during the active-mode communication already occurring on the phone on "SIM 0" as previously described), an MT call/an SMS/some other active-mode communication may be received at the watch modem 208, which sends 224 a notification of the same to a watch AP 206. This notification may cause the watch to present a notification to the user regarding the active-mode network communication on "SIM 1" via some user interface (e.g., a screen of the watch, a tone played by a speaker of the watch, etc.).

In some embodiments, the watch AP 206 may further inform the phone AP 204 of the MT call/SMS/other active-mode communication received on "SIM 1". In some such cases, the watch AP 206 may instruct 226 the phone AP 204 to present (visually, with audio, etc.) a notification that there is active-mode communication occurring on "SIM 1" on the watch. This instruction may be sent via, for example, a Bluetooth^{®}, WiFi^{®}, or some other communication channel that exists between the phone and the watch, as described herein. In some of these cases, the phone may present the user with an option to hold the present active-mode communication on "SIM 0" and receive the active mode communication on "SIM 1" by means of the watch modem 208 and the communication channel between the watch and the phone.

At a later time, the active-mode network communications on "SIM 1" end and the watch modem 208 informs 228 the watch AP 206 that this has occurred. The watch AP 206 in turn informs 230 the phone AP 204 that the active-mode network communications on "SIM 1" at the watch have ended.

Then, the active-mode communications on "SIM 0" at the phone end, the phone MSIM modem 202 sends 232 the phone AP 204 a message that this has occurred. As illustrated, "Modem 0" and "Mode 1" are accordingly idle at the phone MSIM modem 202.

Upon determining that all prior active-mode network communications across the phone and the watch (as these have been described) are ended, the phone AP 204 sends 234 the watch AP 206 an instruction to have the watch modem 208 switch to the default SIM for the watch and to enter a sleep mode. In response, the watch AP 206 sends 236 the watch modem 208 an instruction to switch the SIM of the watch. As illustrated, the watch may then be understood to use "SIM 0" (may be understood to have returned to the default SIM for the watch).

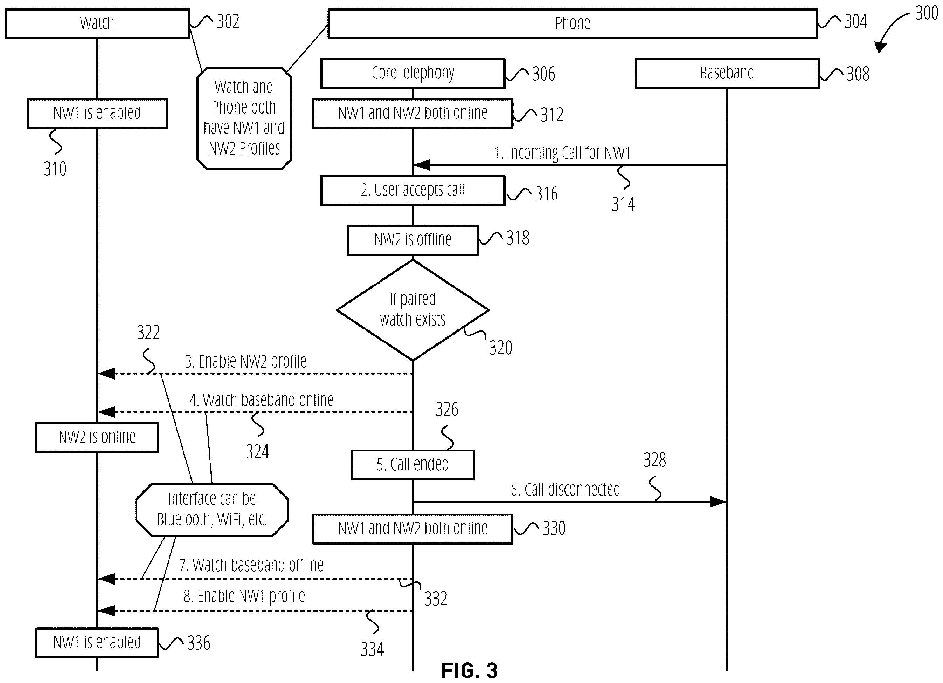

FIG. 3 illustrates a flow diagram 300 for a method of using coordinated UEs to prevent missed communications at a primary UE operating in a DSDS mode. The flow diagram 300 relates to a case where a primary UE is a smartphone (or "phone") 304 and a secondary UE is a smartwatch (or "watch") 302, and where (at least) the primary UE operates in a DSDS mode (but note that UE(s) of arbitrary other form factors may have instead been used in place of either the phone or the watch). The phone 304 is illustrated in the flow diagram 300 in terms of its core telephony functionality 306 and its baseband functionality 308.

As illustrated, the watch 302 and the phone 304 are each configured with each of two SIMs, one for a first network operated by a first network operator ("NW1") profile and one for a second network operated by a second network operator ("NW2").

The SIM for NW1 is enabled 310 at the watch 302 (e.g., by default). The core telephony functionality 306 is configured with a DSDS configuration where SIMs for each of NW1 and NW2 are online 312.

An active-mode network communication from NW1 (in the particular embodiment displayed in FIG. 3, a call) arrives at the baseband functionality 308 of the phone 304, which informs 314 the core telephony functionality 306 of the phone 304 of the same. The user accepts 316 the call, which causes the SIM for NW2 to go offline 318 at the phone 304 (e.g., enters a suspended state).

The core telephony functionality 306 then determines 320 whether the watch 302 is in fact paired to the phone 304. As part of this determination, the core telephony functionality 306 may analyze whether the watch 302 and the phone 304 are within a given proximity of each other. In the embodiment of the flow diagram 300, the watch 302 and the phone 304 are paired and are within the given proximity to each other.

The core telephony functionality 306 then instructs 322 the watch 302 to enable the SIM for NW2. Further, the core telephony functionality 306 may instruct 324 the watch 302 to bring its baseband online. As is described herein, communications between the phone 304 and the watch 302 may occur via Bluetooth^{®}, WiFi^{®}, or some other communication channel that exists between the phone and the watch.

In response, the watch 302 brings the SIM for NW2 online, such that it may receive/handle any active-mode network communications for NW2 during the period of time where the phone 304 operates the call on NW1.

Then, the call on NW1 ends 326, and the core telephony functionality 306 informs 328 the baseband functionality 308 that this has occurred. Because there is no longer an active call at the phone 304 on "SIM 1", the SIMs for each of NW1 and NW2 are back online 330 at the core telephony functionality 306 of the watch 302 according to the DSDS mode operated by the phone 304 (e.g., the phone 304 can again monitor RRC idle mode network communications on each of the SIMs for each of NW1 and NW2).

The core telephony functionality 306 may then instruct 332 the watch 302 to bring its baseband offline. Further, the core telephony functionality 306 then instructs 334 the watch 302 to enable the SIM for NW1. In response, the watch 302 enables the SIM for NW1 (e.g., returns to the default SIM for the watch 302).

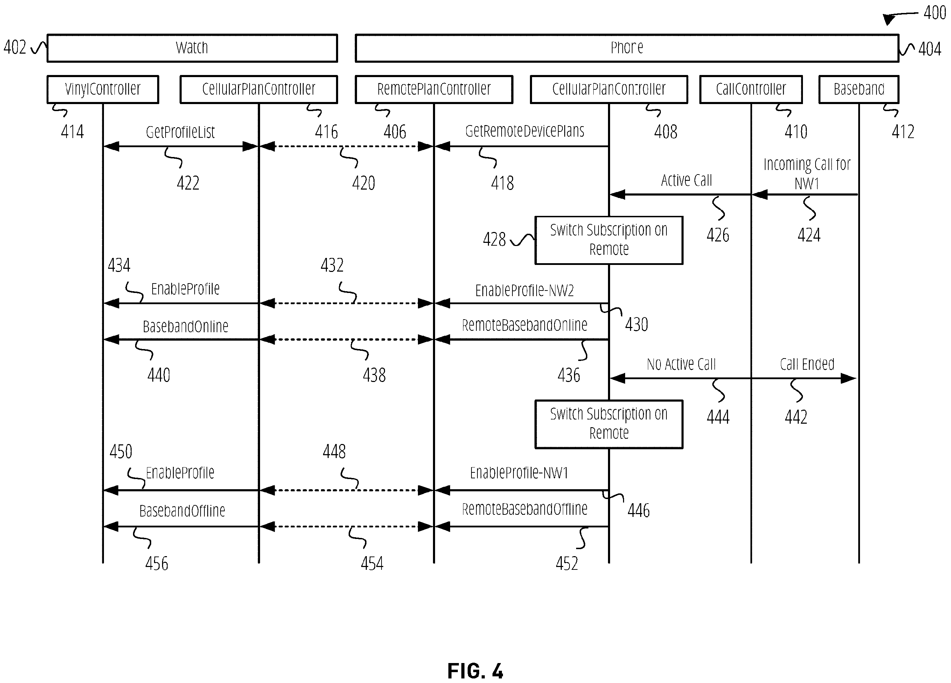

FIG. 4 illustrates a flow diagram 400 for a method of using coordinated UEs to prevent missed communications at a primary UE operating in a DSDS mode. The flow diagram 400 relates to a case where a primary UE is a smartphone (or "phone") 404 and a secondary UE is a smartwatch (or "watch") 402, and where (at least) the primary UE operates in a DSDS mode (but note that UE(s) of arbitrary other form factors may have instead been used in place of either the phone or the watch). The phone 404 is illustrated in the flow diagram 400 in terms of its RemotePlanController functionality 406, its CellularPlanController functionality 408, its CallController functionality 410, and its baseband functionality 412, while the watch 402 is illustrated in terms of its VinylController functionality 414 and its CellularPlanController functionality 416.

For communications between the phone 404 and the watch 402, the RemotePlanController functionality 406 of the phone 404 and the CellularPlanController functionality 416 of the watch 402 may communicate with each other using a communication channel, as illustrated generally in the flow diagram 400. As is described herein, these communications may occur via Bluetooth^{®}, WiFi^{®}, or some other communication channel that exists between the phone 404 and the watch 402.

As illustrated, within the phone 404, a GetRemoteDevicePlans request is sent 418 from the CellularPlanController functionality 408 to the RemotePlanController functionality 406, which communicates 420 the request to the watch 402. In response, the watch 402 implements 422 GetProfileList messaging between its VinylController functionality 414 and the CellularPlanController functionality 416 to retrieve the SIMs used at the watch and communicates 420 this information back to the RemotePlanController functionality 406 of the phone 404. These communications inform the phone 404 of the two SIMs used at the watch.

A first of these two SIMs is for a first network operated by a first network operator ("NW1") and a second of these two SIMs is for a second network operated by a second network operator ("NW2").

In some embodiments, NW1 may be the default SIM of the watch 402. This may in at least some embodiments be set at the watch 402 by the phone 404 during and/or in response to the communications 418, 420, 422, as these are illustrated in FIG. 4.

An active-mode network communication on NW1 (in the particular embodiment displayed in FIG. 4, a call) arrives at the baseband functionality 412 of the phone 404, which informs 424 the CallController functionality 410 of the phone 404 of the same. The CallController functionality 410 forwards 426 this indication to the CellularPlanController functionality 408 of the phone 404.

Based on the active call on the SIM for NW1, the CellularPlanController functionality 408 of the phone 404 determines to switch 428 the current subscription of the remote (the watch 402). Accordingly, the CellularPlanController functionality 408 instructs 430 the RemotePlanController functionality 406 to cause the SIM for NW2 to be enabled on the watch 402. The RemotePlanController functionality 406 in turn communicates 432 this instruction to the CellularPlanController functionality 416 of the watch 402 via the communication channel between the phone 404 and the watch 402. The CellularPlanController functionality 416 then instructs 434 the VinylController functionality 414 to enable the SIM for NW1.

Further, the CellularPlanController functionality 408 instructs 436 the RemotePlanController functionality 406 to cause the watch 402 to bring its baseband online. The RemotePlanController functionality 406 in turn communicates 438 this instruction to the CellularPlanController functionality 416 of the watch 402 via the communication channel between the phone 404 and the watch 402. The CellularPlanController functionality 416 then instructs 440 the VinylController functionality 414 to bring its baseband online.

In this state, the watch 402 may receive/handle any active-mode network communications for NW2 during the period of time where the phone 404 operates the call on NW1.

The call on NW1 on the phone 404 subsequently ends. The CallController functionality 410 informs 442 that the call has ended and further indicates 444 to the CellularPlanController functionality 408 that there is no active call.

Based on the fact that there is no active call, the CellularPlanController functionality 408 of the phone 404 determines to switch 428 the current subscription of the remote (the watch 402) to NW2. Accordingly, the CellularPlanController functionality 408 instructs 446 the RemotePlanController functionality 406 to cause the SIM for NW2 to be enabled on the watch 402. The RemotePlanController functionality 406 in turn communicates 448 this instruction to the CellularPlanController functionality 416 of the watch 402 via the communication channel between the phone 404 and the watch 402. The CellularPlanController functionality 416 then instructs 450 the VinylController functionality 414 to enable the SIM for NW2.

Further, the CellularPlanController functionality 408 instructs 452 the RemotePlanController functionality 406 to cause the watch 402 to take its baseband offline. The RemotePlanController functionality 406 in turn communicates 454 this instruction to the CellularPlanController functionality 416 of the watch 402 via the communication channel between the phone 404 and the watch 402. The CellularPlanController functionality 416 then instructs 450 the VinylController functionality 414 to take its baseband offline.

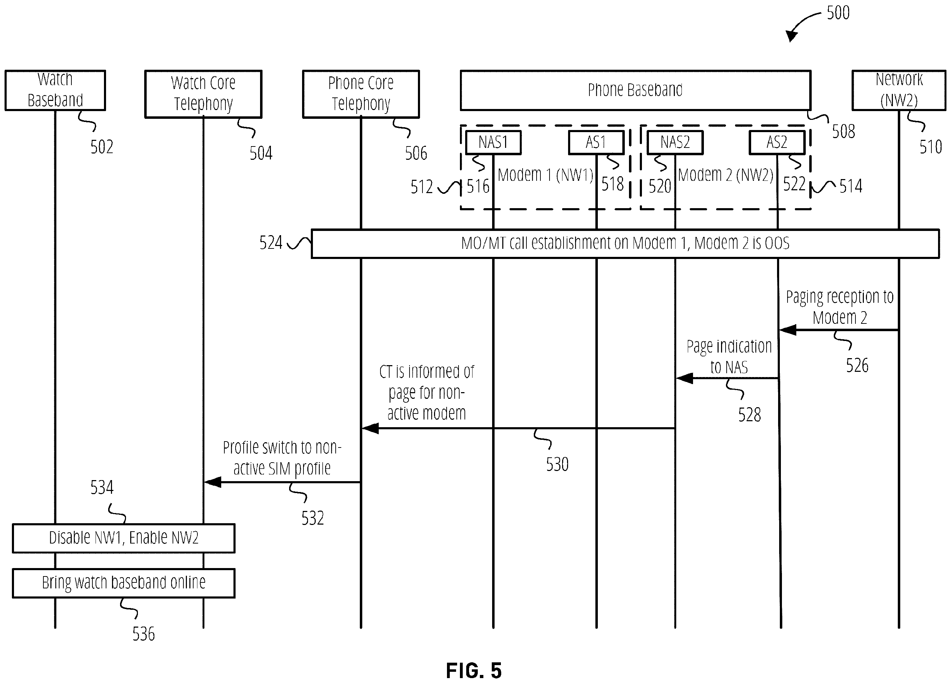

FIG. 5 illustrates a flow diagram 500 for a method of using coordinated UEs to prevent missed communications at a primary UE operating in a DSDS mode. The flow diagram 500 relates to a case where a primary UE is a smartphone (or "phone") and a secondary UE is a smartwatch (or "watch"), and where (at least) the primary UE operates in a DSDS mode (but note that UE(s) of arbitrary other form factors may have instead been used in place of either the phone or the watch). The DSDS configuration of the phone may use a first SIM for a first network ("NW1") and a second SIM for a second network ("NW2"). Each of these SIMs may be configured at each of the phone and the watch.

The flow diagram 500 is illustrated in terms of a watch baseband functionality 502 and a watch core telephony functionality 504 of the watch, a phone core telephony functionality 506 and a phone baseband functionality 508 of the phone, and a network functionality 510 associated with NW2.

The phone baseband functionality 508 includes a first modem ("Modem 1") 512 associated with NW1 and a second modem ("Modem 2") 514 associated with NW2. "Modem 1" 512 operates a first non-access stratum (NAS) layer ("NAS1") 516 and a first access stratum (AS) layer ("AS1") 518 with respect to NW1. Further, "Modem 2" 514 operates a second NAS layer ("NAS2") 520 and a second AS layer ("AS2") 522 with respect to NW2.

Preliminarily, active-mode communications on the first SIM are established 524 with respect to the first SIM on "Modem 1" 512. This causes the second SIM/second modem to go out of service (OOS) at the phone, as illustrated.

In some embodiments, a primary UE operating under a DSDS mode with respect to a first SIM and a second SIM may be capable of receiving paging messages on the second SIM during active-mode network communications on a first SIM. The embodiment represented in the flow diagram 500 corresponds to a case where the phone is capable of using the DSDS configuration in a dual receive (DR) mode (a "DR-DSDS" mode). In the DR-DSDS mode, each of "Modem 1" 512 and "Modem 2" 514 may be associated with/access the air interface for their corresponding networks through independent receive (Rx) paths. In such circumstances, the first SIM for NW1 on "Modem 1" 512 and the second SIM for NW2 do not present any inherent radio frequency (RF) coexistence issues (e.g., the first SIM and the second SIM do not conflict at the RF front end of the phone). In such circumstances it may be that the DR-DSDS mode supports (simultaneously) an RRC connected state on a first SIM (such that active-mode network communications through the first SIM may be utilized) and an RRC idle state on the second SIM (such that paging messages may still be received on the second SIM while the active-mode network communications are occurring on the first SIM).

The flow diagram 500 illustrates that the during the active-mode communications at the phone on the first SIM, NW2 sends 526 a paging message to the phone. The paging message is successfully received at the AS2 522 of "Modem 2" 514 of the phone at this time, according to the DR-DSDS mode of the phone.

The AS2 522 then indicates 528 to the NAS2 520 of the phone that the page has been received. The NAS2 520 subsequently informs 530 the phone core telephony functionality 506 of the phone that a page for the non-active modem of the phone ("Modem 2" 514) has been received.

In response, the phone core telephony functionality 506 then instructs 532 the watch core telephony functionality 504 to perform a profile switch to the non-active SIM (the second SIM). Communications between the phone and the watch may occur via Bluetooth^{®}, WiFi^{®}, or some other communication channel that exists between the phone and the watch.

The watch core telephony functionality 504 then works with the watch baseband functionality 502 to switch 534 the current subscription of the watch from the first SIM corresponding to NW1 (which may be the default SIM for the watch) to the second SIM, which is enabled at the watch instead. Further, the watch core telephony functionality 504 instructs 532 the watch baseband functionality 502 to bring the baseband of the watch online.

The watch is thus enabled to handle active-mode communications on the second SIM (e.g., corresponding to the paging message for the second SIM that was first received at the phone and then indicated to the watch).

The flow diagram 500 of FIG. 5 thus represents a case where a switch of SIM at the watch to the second SIM is only performed when active-mode communications on the second SIM (e.g., when ultimately triggered by a paging message for the second SIM) are needed during the active-mode communications on the first SIM at the phone. In this manner, network resources (signaling, processing) may be conserved over cases where the switch of SIM at the watch is always indicated by the phone in response to all instances of active-mode communication on the first SIM at the phone.

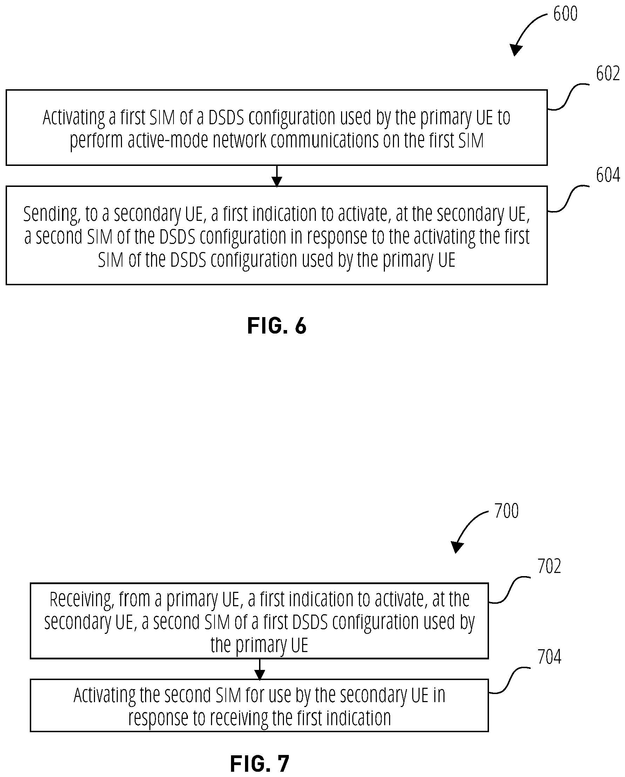

FIG. 6 illustrates a method 600 of a primary UE, according to embodiments herein. The method 600 includes activating 602 a first SIM of a DSDS configuration used by the primary UE to perform active-mode network communications on the first SIM. The method 600 further includes sending 604, to a secondary UE, a first indication to activate, at the secondary UE, a second SIM of the DSDS configuration in response to the activating the first SIM of the DSDS configuration used by the primary UE.

In some embodiments, the method 600 further includes determining that the active-mode network communications on the first SIM are ended; and sending, to the secondary UE, a second indication to activate, at the secondary UE, the first SIM of the DSDS configuration in response to the determination that the active-mode network communications on the first SIM are ended.

In some embodiments, the method 600 further includes sending, to the secondary UE, configuration information comprising the first SIM and the second SIM of the DSDS configuration.

In some embodiments, the method 600 further includes sending, to the secondary UE, a second indication that the first SIM of the DSDS configuration is a default SIM of the secondary UE.

In some embodiments, the method 600 further includes determining that the secondary UE is within a proximity of the primary UE, wherein the first indication is further sent to the secondary UE in response to the determination that the secondary UE is within the proximity of the primary UE.

In some embodiments, the method 600 further includes receiving a paging message corresponding to the second SIM of the DSDS configuration during the active-mode network communications on the first SIM, wherein the first indication is further sent to the secondary UE in response to the receipt of the paging message.

In some embodiments, the method 600 further includes receiving, from the secondary UE, a notification that active-mode network communications on the second SIM are available to the primary UE through the secondary UE.

In some of the method 600, the primary UE and the secondary UE communicate via a Bluetooth^{®} connection.

FIG. 7 illustrates a method 700 of a secondary UE configured with a first SIM and a second SIM of a first DSDS configuration used by a primary UE, according to embodiments herein. The method 700 includes receiving 702, from a primary UE, a first indication to activate, at the secondary UE, the second SIM of the first DSDS configuration used by the primary UE. The method 700 further includes activating 704 the second SIM for use by the secondary UE in response to receiving the first indication.

In some embodiments, the method 700 further includes deactivating the first SIM at the secondary UE in response to receiving the first indication.

In some embodiments, the method 700 further includes performing active-mode network communications on the second SIM.

In some embodiments, the method 700 further includes sending, to the primary UE, a notification that active-mode network communications on the second SIM are available to the primary UE through the secondary UE.

In some embodiments, the method 700 further includes receiving, from the primary UE, after the receipt of the first indication, a second indication to activate, at the secondary UE, the first SIM of the first DSDS configuration; and deactivating the second SIM at the secondary UE and activating the first SIM at the secondary UE in response to receiving the second indication.

In some embodiments, the method 700 further includes receiving, from the primary UE, configuration information comprising the first SIM and the second SIM of the first DSDS configuration.

In some embodiments, the method 700 further includes receiving, from the primary UE, a second indication that the first SIM of the first DSDS configuration is a default SIM of the secondary UE.

In some embodiments of the method 700, the primary UE and the secondary UE communicate via a Bluetooth^{®} connection.

In some embodiments of the method 700, the first SIM and the second SIM are configured in a second DSDS configuration used by the secondary UE.

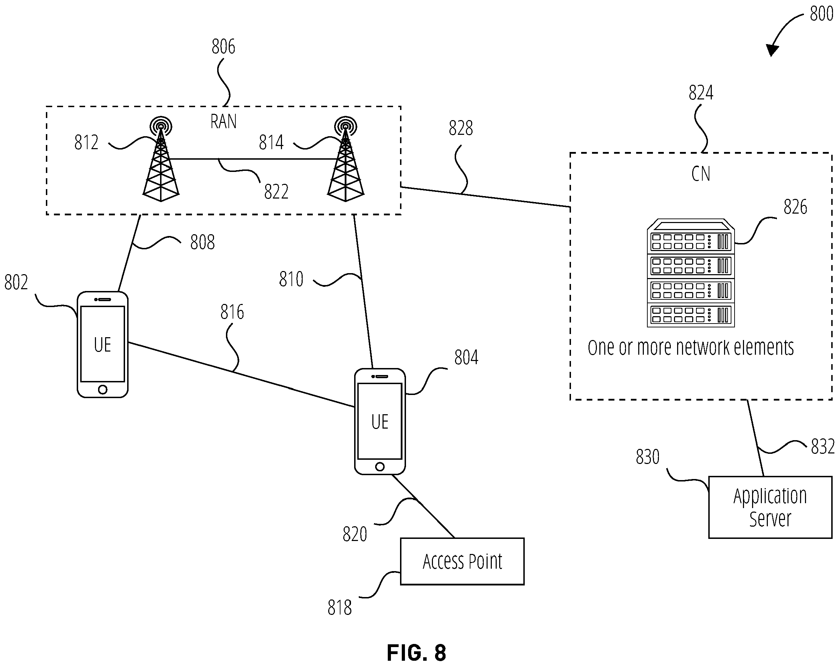

FIG. 8 illustrates an example architecture of a wireless communication system 800, according to embodiments disclosed herein. The following description is provided for an example wireless communication system 800 that operates in conjunction with the LTE system standards and/or 5G or NR system standards as provided by 3GPP technical specifications.

As shown by FIG. 8, the wireless communication system 800 includes UE 802 and UE 804 (although any number of UEs may be used). In this example, the UE 802 and the UE 804 are illustrated as smartphones (e.g., handheld touchscreen mobile computing devices connectable to one or more cellular networks), but may also comprise any mobile or non-mobile computing device configured for wireless communication.

The UE 802 and UE 804 may be configured to communicatively couple with a RAN 806. In embodiments, the RAN 806 may be NG-RAN, E-UTRAN, etc. The UE 802 and UE 804 utilize connections (or channels) (shown as connection 808 and connection 810, respectively) with the RAN 806, each of which comprises a physical communications interface. The RAN 806 can include one or more base stations (such as base station 812 and base station 814) that enable the connection 808 and connection 810.

In this example, the connection 808 and connection 810 are air interfaces to enable such communicative coupling, and may be consistent with RAT(s) used by the RAN 806, such as, for example, an LTE and/or NR.

In some embodiments, the UE 802 and UE 804 may also directly exchange communication data via an interface 816. In some embodiments, the interface 816 may be a sidelink interface. In some embodiments, the interface 816 may represent a channel for communications between the UE 802 and the UE 804 via Bluetooth^{®}, WiFi^{®}, or some other communication channel, as these are described herein in relation to non-active SIM services.

The UE 804 is shown to be configured to access an access point (shown as access point 818) via connection 820. By way of example, the connection 820 can comprise a local wireless connection, such as a connection consistent with any IEEE 802.11 protocol, wherein the access point 818 may comprise a Wi-Fi^{®} router. In this example, the access point 818 may be connected to another network (for example, the Internet) without going through a CN 824.

In embodiments, the UE 802 and UE 804 can be configured to communicate using orthogonal frequency division multiplexing (OFDM) communication signals with each other or with the base station 812 and/or the base station 814 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 812 or base station 814 may be implemented as one or more software entities running on server computers as part of a virtual network. In addition, or in other embodiments, the base station 812 or base station 814 may be configured to communicate with one another via interface 822. In embodiments where the wireless communication system 800 is an LTE system (e.g., when the CN 824 is an EPC), the interface 822 may be an X2 interface. The X2 interface may be defined between two or more base stations (e.g., two or more eNBs and the like) that connect to an EPC, and/or between two eNBs connecting to the EPC. In embodiments where the wireless communication system 800 is an NR system (e.g., when CN 824 is a 5GC), the interface 822 may be an Xn interface. The Xn interface is defined between two or more base stations (e.g., two or more gNBs and the like) that connect to 5GC, between a base station 812 (e.g., a gNB) connecting to 5GC and an eNB, and/or between two eNBs connecting to 5GC (e.g., CN 824).

The RAN 806 is shown to be communicatively coupled to the CN 824. The CN 824 may comprise one or more network elements 826, which are configured to offer various data and telecommunications services to customers/subscribers (e.g., users of UE 802 and UE 804) who are connected to the CN 824 via the RAN 806. The components of the CN 824 may be implemented in one physical device or separate physical devices including components to read and execute instructions from a machine-readable or computer-readable medium (e.g., a non-transitory machine-readable storage medium).

In embodiments, the CN 824 may be an EPC, and the RAN 806 may be connected with the CN 824 via an S1 interface 828. In embodiments, the S1 interface 828 may be split into two parts, an S1 user plane (S1-U) interface, which carries traffic data between the base station 812 or base station 814 and a serving gateway (S-GW), and the S1-MME interface, which is a signaling interface between the base station 812 or base station 814 and mobility management entities (MMEs).

In embodiments, the CN 824 may be a 5GC, and the RAN 806 may be connected with the CN 824 via an NG interface 828. In embodiments, the NG interface 828 may be split into two parts, an NG user plane (NG-U) interface, which carries traffic data between the base station 812 or base station 814 and a user plane function (UPF), and the S1 control plane (NG-C) interface, which is a signaling interface between the base station 812 or base station 814 and access and mobility management functions (AMFs).

Generally, an application server 830 may be an element offering applications that use internet protocol (IP) bearer resources with the CN 824 (e.g., packet switched data services). The application server 830 can also be configured to support one or more communication services (e.g., VoIP sessions, group communication sessions, etc.) for the UE 802 and UE 804 via the CN 824. The application server 830 may communicate with the CN 824 through an IP communications interface 832.

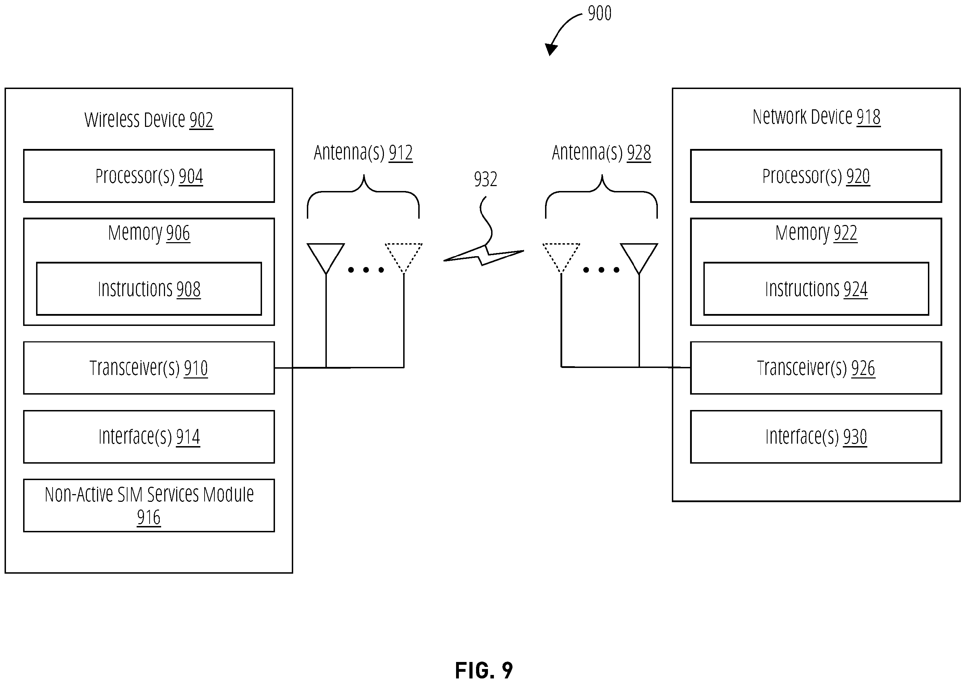

FIG. 9 illustrates a system 900 for performing signaling 932 between a wireless device 902 and a network device 918, according to embodiments disclosed herein. The system 900 may be a portion of a wireless communications system as herein described. The wireless device 902 may be, for example, a UE of a wireless communication system. The network device 918 may be, for example, a base station (e.g., an eNB or a gNB) of a wireless communication system.

The wireless device 902 may include one or more processor(s) 904. The processor(s) 904 may execute instructions such that various operations of the wireless device 902 are performed, as described herein. The processor(s) 904 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 902 may include a memory 906. The memory 906 may be a non-transitory computer-readable storage medium that stores instructions 908 (which may include, for example, the instructions being executed by the processor(s) 904). The instructions 908 may also be referred to as program code or a computer program. The memory 906 may also store data used by, and results computed by, the processor(s) 904.

The wireless device 902 may include one or more transceiver(s) 910 that may include radio frequency (RF) transmitter circuitry and/or receiver circuitry that use the antenna(s) 912 of the wireless device 902 to facilitate signaling (e.g., the signaling 932) to and/or from the wireless device 902 with other devices (e.g., the network device 918) according to corresponding RATs.

The wireless device 902 may include one or more antenna(s) 912 (e.g., one, two, four, or more). For embodiments with multiple antenna(s) 912, the wireless device 902 may leverage the spatial diversity of such multiple antenna(s) 912 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 902 may be accomplished according to precoding (or digital beamforming) that is applied at the wireless device 902 that multiplexes the data streams across the antenna(s) 912 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 902 may implement analog beamforming techniques, whereby phases of the signals sent by the antenna(s) 912 are relatively adjusted such that the (joint) transmission of the antenna(s) 912 can be directed (this is sometimes referred to as beam steering).

The wireless device 902 may include one or more interface(s) 914. The interface(s) 914 may be used to provide input to or output from the wireless device 902. For example, a wireless device 902 that is a UE may include interface(s) 914 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 910/antenna(s) 912 already described) that allow for communication between the UE and other devices and may operate according to known protocols (e.g., Wi-Fi^{®}, Bluetooth^{®}, and the like).

The wireless device 902 may include a non-active SIM services module 916. The non-active SIM services module 916 may be implemented via hardware, software, or combinations thereof. For example, the non-active SIM services module 916 may be implemented as a processor, circuit, and/or instructions 908 stored in the memory 906 and executed by the processor(s) 904. In some examples, the non-active SIM services module 916 may be integrated within the processor(s) 904 and/or the transceiver(s) 910. For example, the non-active SIM services module 916 may be implemented by a combination of software components (e.g., executed by a DSP or a general processor) and hardware components (e.g., logic gates and circuitry) within the processor(s) 904 or the transceiver(s) 910.

The non-active SIM services module 916 may be used for various aspects of the present disclosure, for example, aspects of FIG. 1 through FIG. 7. The non-active SIM services module 916 may be configured to cause the wireless device 902 to act as a primary UE as has been described herein. For example, the non-active SIM services module 916 may configure the wireless device 902 to activate a first SIM of a DSDS configuration used by the wireless device 902 to perform active-mode network communications on the first SIM and to further send, to a secondary UE, a first indication to activate, at the secondary UE, a second SIM of the DSDS configuration in response to the activating the first SIM of the DSDS configuration used by the wireless device 902. Additionally, or alternatively, the non-active SIM services module 916 may be configured to cause the wireless device 902 to act as a secondary UE as has been described herein. For example, the non-active SIM services module 916 may configure the wireless device 902 to receive, from a primary UE, an indication to activate, at the wireless device 902, a second SIM of a DSDS configuration used by the primary UE that has first and second SIMs that are (also) configured at the wireless device 902, and to activate the second SIM for use by the secondary UE in response to receiving the indication.

The network device 918 may include one or more processor(s) 920. The processor(s) 920 may execute instructions such that various operations of the network device 918 are performed, as described herein. The processor(s) 920 may include one or more baseband processors implemented using, for example, a CPU, a DSP, an ASIC, a controller, an FPGA device, another hardware device, a firmware device, or any combination thereof configured to perform the operations described herein.

The network device 918 may include a memory 922. The memory 922 may be a non-transitory computer-readable storage medium that stores instructions 924 (which may include, for example, the instructions being executed by the processor(s) 920). The instructions 924 may also be referred to as program code or a computer program. The memory 922 may also store data used by, and results computed by, the processor(s) 920.

The network device 918 may include one or more transceiver(s) 926 that may include RF transmitter circuitry and/or receiver circuitry that use the antenna(s) 928 of the network device 918 to facilitate signaling (e.g., the signaling 932) to and/or from the network device 918 with other devices (e.g., the wireless device 902) according to corresponding RATs.

The network device 918 may include one or more antenna(s) 928 (e.g., one, two, four, or more). In embodiments having multiple antenna(s) 928, the network device 918 may perform MIMO, digital beamforming, analog beamforming, beam steering, etc., as has been described.

The network device 918 may include one or more interface(s) 930. The interface(s) 930 may be used to provide input to or output from the network device 918. For example, a network device 918 that is a base station may include interface(s) 930 made up of transmitters, receivers, and other circuitry (e.g., other than the transceiver(s) 926/antenna(s) 928 already described) that enables the base station to communicate with other equipment in a core network, and/or that enables the base station to communicate with external networks, computers, databases, and the like for purposes of operations, administration, and maintenance of the base station or other equipment operably connected thereto.

Embodiments contemplated herein include an apparatus comprising means to perform one or more elements of any of the method 600 or the method 700. This apparatus may be, for example, an apparatus of a UE (such as a wireless device 902 that is a UE, as described herein).

Embodiments contemplated herein include one or more non-transitory computer-readable media comprising instructions to cause an electronic device, upon execution of the instructions by one or more processors of the electronic device, to perform one or more elements of any of the method 600 or the method 700. This non-transitory computer-readable media may be, for example, a memory of a UE (such as a memory 906 of a wireless device 902 that is a UE, as described herein).

Embodiments contemplated herein include an apparatus comprising logic, modules, or circuitry to perform one or more elements of any of the method 600 or the method 700. This apparatus may be, for example, an apparatus of a UE (such as a wireless device 902 that is a UE, as described herein).

Embodiments contemplated herein include an apparatus comprising: one or more processors and one or more computer-readable media comprising instructions that, when executed by the one or more processors, cause the one or more processors to perform one or more elements of any of the method 600 or the method 700. This apparatus may be, for example, an apparatus of a UE (such as a wireless device 902 that is a UE, as described herein).

Embodiments contemplated herein include a signal as described in or related to one or more elements of any of the method 600 or the method 700.

Embodiments contemplated herein include a computer program or computer program product comprising instructions, wherein execution of the program by a processor is to cause the processor to carry out one or more elements of any of the method 600 or the method 700. The processor may be a processor of a UE (such as a processor(s) 904 of a wireless device 902 that is a UE, as described herein). These instructions may be, for example, located in the processor and/or on a memory of the UE (such as a memory 906 of a wireless device 902 that is a UE, as described herein).

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary methods, apparatuses, and non-transitory computer-readable storage media are set out in the following items.
1. A method of a primary user equipment (UE), comprising:
   activating a first subscriber identity module (SIM) of a dual SIM dual standby (DSDS) configuration used by the primary UE to perform active-mode network communications on the first SIM;
   sending, to a secondary UE, a first indication to activate, at the secondary UE, a second SIM of the DSDS configuration in response to the activating the first SIM of the DSDS configuration used by the primary UE.
2. The method of item 1, further comprising:
   determining that the active-mode network communications on the first SIM are ended; and
   sending, to the secondary UE, a second indication to activate, at the secondary UE, the first SIM of the DSDS configuration in response to the determination that the active-mode network communications on the first SIM are ended.
3. The method of item 1, further comprising sending, to the secondary UE, configuration information comprising the first SIM and the second SIM of the DSDS configuration.
4. The method of item 1, further comprising sending, to the secondary UE, a second indication that the first SIM of the DSDS configuration is a default SIM of the secondary UE.
5. The method of item 1, further comprising determining that the secondary UE is within a proximity of the primary UE, wherein the first indication is further sent to the secondary UE in response to the determination that the secondary UE is within the proximity of the primary UE.
6. The method of item 1, further comprising receiving a paging message corresponding to the second SIM of the DSDS configuration during the active-mode network communications on the first SIM, wherein the first indication is further sent to the secondary UE in response to the receipt of the paging message.
7. The method of item 1, further comprising receiving, from the secondary UE, a notification that active-mode network communications on the second SIM are available to the primary UE through the secondary UE.
8. The method of item 1, wherein the primary UE and the secondary UE communicate via a Bluetooth^{®} connection.
9. A method of a secondary user equipment (UE) configured with a first subscriber identity module (SIM) and a second SIM of a first dual SIM dual standby (DSDS) configuration used by a primary UE, comprising:
   receiving, from a primary UE, a first indication to activate, at the secondary UE, the second SIM of the first DSDS configuration used by the primary UE; and
   activating the second SIM for use by the secondary UE in response to receiving the first indication.
10. The method of item 9, further comprising deactivating the first SIM at the secondary UE in response to receiving the first indication.
11. The method of item 9, further comprising performing active-mode network communications on the second SIM.
12. The method of item 11, further comprising sending, to the primary UE, a notification that active-mode network communications on the second SIM are available to the primary UE through the secondary UE.
13. The method of item 9, further comprising:
   receiving, from the primary UE, after the receipt of the first indication, a second indication to activate, at the secondary UE, the first SIM of the first DSDS configuration; and
   deactivating the second SIM at the secondary UE and activating the first SIM at the secondary UE in response to receiving the second indication.
14. The method of item 9, further comprising receiving, from the primary UE, configuration information comprising the first SIM and the second SIM of the first DSDS configuration.
15. The method of item 9, further comprising receiving, from the primary UE, a second indication that the first SIM of the first DSDS configuration is a default SIM of the secondary UE.
16. The method of item 9, wherein the primary UE and the secondary UE communicate via a Bluetooth^{®} connection.
17. The method of item 9, wherein the first SIM and the second SIM are configured in a second DSDS configuration used by the secondary UE.
18. An apparatus comprising means to perform the method of any of item 1 to item 17.
19. A computer-readable media comprising instructions to cause an electronic device, upon execution of the instructions by one or more processors of the electronic device, to perform the method of any of item 1 to item 17.
20. An apparatus comprising logic, modules, or circuitry to perform the method of any of item 1 to item 17.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

## Claims

1. A method of a primary user equipment (UE), comprising:
activating a first subscriber identity module (SIM) of a dual SIM dual standby (DSDS) configuration used by the primary UE to perform active-mode network communications on the first SIM;
sending, to a secondary UE, a first indication to activate, at the secondary UE, a second SIM of the DSDS configuration in response to the activating the first SIM of the DSDS configuration used by the primary UE.

2. The method of claim 1, further comprising:
determining that the active-mode network communications on the first SIM are ended; and
sending, to the secondary UE, a second indication to activate, at the secondary UE, the first SIM of the DSDS configuration in response to the determination that the active-mode network communications on the first SIM are ended.

3. The method of claim 1, further comprising;
sending, to the secondary UE, configuration information comprising the first SIM and the second SIM of the DSDS configuration; or
sending, to the secondary UE, a second indication that the first SIM of the DSDS configuration is a default SIM of the secondary UE.

4. The method of claim 1, further comprising determining that the secondary UE is within a proximity of the primary UE, wherein the first indication is further sent to the secondary UE in response to the determination that the secondary UE is within the proximity of the primary UE.

5. The method of claim 1, further comprising receiving a paging message corresponding to the second SIM of the DSDS configuration during the active-mode network communications on the first SIM, wherein the first indication is further sent to the secondary UE in response to the receiving of the paging message.

6. The method of claim 1, further comprising receiving, from the secondary UE, a notification that active-mode network communications on the second SIM are available to the primary UE through the secondary UE.

7. A method of a secondary user equipment (UE) configured with a first subscriber identity module (SIM) and a second SIM of a first dual SIM dual standby (DSDS) configuration used by a primary UE, comprising:
receiving, from a primary UE, a first indication to activate, at the secondary UE, the second SIM of the first DSDS configuration used by the primary UE; and
activating the second SIM for use by the secondary UE in response to receiving the first indication.

8. The method of claim 7, further comprising deactivating the first SIM at the secondary UE in response to receiving the first indication.

9. The method of claim 7, further comprising performing active-mode network communications on the second SIM.

10. The method of claim 9, further comprising sending, to the primary UE, a notification that active-mode network communications on the second SIM are available to the primary UE through the secondary UE.

11. The method of claim 7, further comprising:
receiving, from the primary UE, after the receiving of the first indication, a second indication to activate, at the secondary UE, the first SIM of the first DSDS configuration; and
deactivating the second SIM at the secondary UE and activating the first SIM at the secondary UE in response to receiving the second indication.

12. The method of claim 7, further comprising:
receiving, from the primary UE, configuration information comprising the first SIM and the second SIM of the first DSDS configuration; or
receiving, from the primary UE, a second indication that the first SIM of the first DSDS configuration is a default SIM of the secondary UE.

13. The method of claim 7, wherein the first SIM and the second SIM are configured in a second DSDS configuration used by the secondary UE.

14. An apparatus comprising means to perform the method of any of claim 1 to claim 13.

15. A computer-readable media comprising instructions to cause an electronic device, upon execution of the instructions by one or more processors of the electronic device, to perform the method of any of claim 1 to claim 13.
